Europäisches Patentamt

European Patent Office

Office européen des brevets

(11) Veröffentlichungsnummer : **0 083 356**
**B1**

(12) **EUROPÄISCHE PATENTSCHRIFT**

(45) Veröffentlichungstag der Patentschrift :
03.04.85

(21) Anmeldenummer : 82902154.2

(22) Anmeldetag : 06.07.82

(86) Internationale Anmeldenummer :
PCT/DE 82/00139

(87) Internationale Veröffentlichungsnummer :
WO/8300175 (20.01.83 Gazette 83/02)

(51) Int. Cl.⁴ : **E 04 B 1/19, F 16 B 7/18,
E 04 B 1/58**

(54) FACHWERK AUS HOHLPROFILEN.

(30) Priorität : 10.07.81 DE 3127243

(43) Veröffentlichungstag der Anmeldung :
13.07.83 Patentblatt 83/28

(45) Bekanntmachung des Hinweises auf die Patenterteilung : 03.04.85 Patentblatt 85/14

(84) Benannte Vertragsstaaten :
AT BE CH FR GB LI LU NL SE

(56) Entgegenhaltungen :
DD-C- 44 875
DE-A- 1 815 849
FR-A- 2 200 420

(73) Patentinhaber : RÜTER, Ewald
Bittermarkstrasse 70
D-4600 Dortmund 50 (DE)

(72) Erfinder : RÜTER, Ewald
Bittermarkstrasse 70
D-4600 Dortmund 50 (DE)

(74) Vertreter : Patentanwälte Dipl.-Ing. Conrad Köchling
Dipl.-Ing. Conrad-Joachim Köchling
Fleyer Strasse 135
D-5800 Hagen 1 (DE)

## Beschreibung

Die Erfindung betrifft ein Fachwerk aus Hohlprofilen als Stabelemente gemäß Oberbegriff des Anspruches 1. Ein derartiges Fachwerk ist aus der DE-OS 18 15 849 bekannt. Zur Verbindung von Anschlußstutzen und Stabelement ist dort eine Kopfschraube mit einem Schaftteil vorgesehen, über welches ein mit dem Schaftteil zusammenwirkendes Kupplungsstück in Form einer Mutter übergeschoben ist. Dieses Kupplungsstück ist von außen mittels eines Schraubenschlüssels oder dergleichen betätigbar, so daß die Schraube angezogen werden kann.

Die Schraube weist ferner an ihrem Kopf eine Mehrkantausbildung auf, die mit einem Werkzeug in Eingriff gebracht werden kann, welches durch ein rohrförmiges Führungsteil umgeben ist und gemeinsam mit diesem durch die Öffnung in der Wandung des Stabelementes einschiebbar ist. Hierdurch sind hohe Vorspannkräfte der Spannverbindung zu erzeugen.

Bei diesem Stand der Technik ist es jeweils erforderlich, daß das Stabelement zunächst einmal feuerverzinkt wird, dann in die stirnseitige Öffnung die Schraube und die zugehörige Scheibe eingesetzt und die Scheibe mit dem Stabelement verschweißt wird und anschließend im Schweißbereich eine Kaltverzinkung vorzusehen ist.

Diese recht aufwendige Vorgehensweise ist deshalb erforderlich, weil nach Anordnung der Scheibe die Schraube schon zwangsläufig im Stabelement gehaltert ist, wobei die Schraube aber nicht mit feuerverzinkt werden soll. Eine Kunststoffummantelung ist aus demselben Grunde praktisch unmöglich oder nur mit sehr großem Aufwand zu betreiben.

Hiervon ausgehend liegt der Erfindung die Aufgabe zugrunde, ein Raumfachwerk zu schaffen, bei dem hohe Vorspannkräfte der Schraube unter Verwendung üblicher Schlagschrauber möglich sind und dennoch die Schraube erst nach dem Feuerverzinken oder Kunststoffummanteln des kompletten Stabelementes samt notwendigen Halte- und Führungsteilen einsetzen zu können. Zur Lösung dieser Aufgabe dienen die im Kennzeichenteil des Anspruches 1 aufgeführten Merkmale. Diese Ausbildung erlaubt es nun, das komplette Stabelement samt notwendigen Führungsteilen und dergleichen fertig zu schweißen und anschließend dieses komplette Teil feuerzuverzinken oder kunststoffzuummanteln. Nach dem Feuerverzinken bzw. Ummanteln ist keine weitere Schweißarbeit mehr nötig. Dabei kann dennoch die Schraube erst nach Beendigung des Verzinkens zur Montage eingesetzt werden. Durch die Kombination dieser Merkmale ist es nämlich möglich, zur Verbindung von Anschlußstutzen und Stabelement eine handelsübliche hochfeste Schraube in das rohrförmige Führungsteil und in die entsprechende Lochung einzuführen. Die Schraube ist dann mittels eines üblichen Schlagschraubers fest anzuziehen, wobei auf den Schlagschrauber eine auf das rohrförmige Führungsteil abgestimmte Kreuzgelenkwelle aufgesteckt ist. Auf diese Weise sind genügende Vorspannkräfte zu übertragen, wobei die Schraube maschinell angezogen werden kann. Die unter Vorspannung angezogene hochfeste Schraube ist ohne zusätzliche Sicherungsteile gesichert.

Um die Schwächung des Stabelementes durch die Anordnung der Schraubendurchtrittsöffnung in der Wandung zu beseitigen wird vorgeschlagen, daß das Führungsteil mündungsseitig mit dem Mündungsrand der Schraubendurchtrittsöffnung des Stabelementes verbunden ist. Die Verbindung erfolgt zweckmäßigerweise in Form einer Schweißverbindung. Bei der Montage ist es vorteilhaft, wenn das Führungsteil runden Innen- und Außenquerschnitt aufweist. Besonders vorteilhaft ist, daß der lichte Innendurchmesser des Führungsteiles nur gering größer als der Außendurchmesser des Kopfes der Kopfschrauben ist und die Kopfschraube als Innenvielkantschraube ausgebildet ist.

Auf diese Weise ist es möglich, eine relativ zum zur Verfügung stehenden Innenquerschnitt große Kopfschraube anzuordnen und diese auch durch ein entsprechendes Werkzeug betätigen zu können.

Es sei noch bemerkt, daß die erfindungsgemäße Ausbildung unabhängig von der Querschnittsform der Stabelemente und des Anschlußelementes ist.

Es können sowohl kreisrunde als auch quadratische oder mehrkantige Querschnittsprofile Verwendung finden. Der Anschlußstutzen kann auch einzelnen Profilabschnitten zusammengeschweißt sein oder auch ein entsprechendes Gußteil Verwendung finden. Wesentlich ist, daß bei Verwendung einer handelsüblichen Schraube ein völlig vorsprungsfreier Übergang zwischen dem Anschlußstutzen und dem Stabelement geschaffen wird, so daß beide Teile einen optisch völlig einheitlichen Eindruck vermitteln. Weiterhin ist vorteilhaft, daß durch die Kombination der Merkmale der Ansprüche 1 und 2 ein dichter Abschluß des Innenraumes der Stabelemente erreicht wird, so daß diese von innen her nicht korrosionsgefährdet sind. Um beispielsweise bei Überkopfmontage eines Stabelementes das Herausfallen der Kopfschraube aus dem Führungsteil zu verhindern, ist vorgesehen, daß der Kopf der Kopfschraube radial außen mit einer elastischen Manschette versehen ist, die an die Innenseite des Führungsteiles anlegbar ist.

Nach dem Einschieben der mit Manschette versehenen Kopfschraube liegt deren Rand an der Innenseite des Führungsteiles an, wobei ausreichende Reibungskräfte zum Halt der Kopfschraube übertragen werden. Diese Reibungskräfte stehen jedoch der Betätigung der Kopfschraube nicht entgegen.

Alternativ oder in Kombination ist zum gleichen Zweck vorgesehen, daß das Führungsteil in einem der Schraubenlänge entsprechenden Abstand von der Scheibe inwandig eine elastische Manschette aufweist. Weiterhin ist in Variation vorgesehen, daß das Führungsteil eine in einem der Schraubenlänge entsprechenden Abstand von der Scheibe endende Federhülse aufweist.

Die Federhülse kann innwandig am Führungsteil befestigt sein. Sie erlaubt das Durchschieben der Kopfschraube, wobei die Federarme der Federhülse dann nach radial außen gedrängt werden, aber nach dem Durchtritt des Schraubenkopfes wieder nach innen federn und damit ein Widerlager für die Kopfschraube bilden, so daß diese nicht aus dem Führungsteil herausfallen kann.

Ein Ausführungsbeispiel der Erfindung ist in der Zeichnung dargestellt und im folgenden näher beschrieben.

Es zeigen :

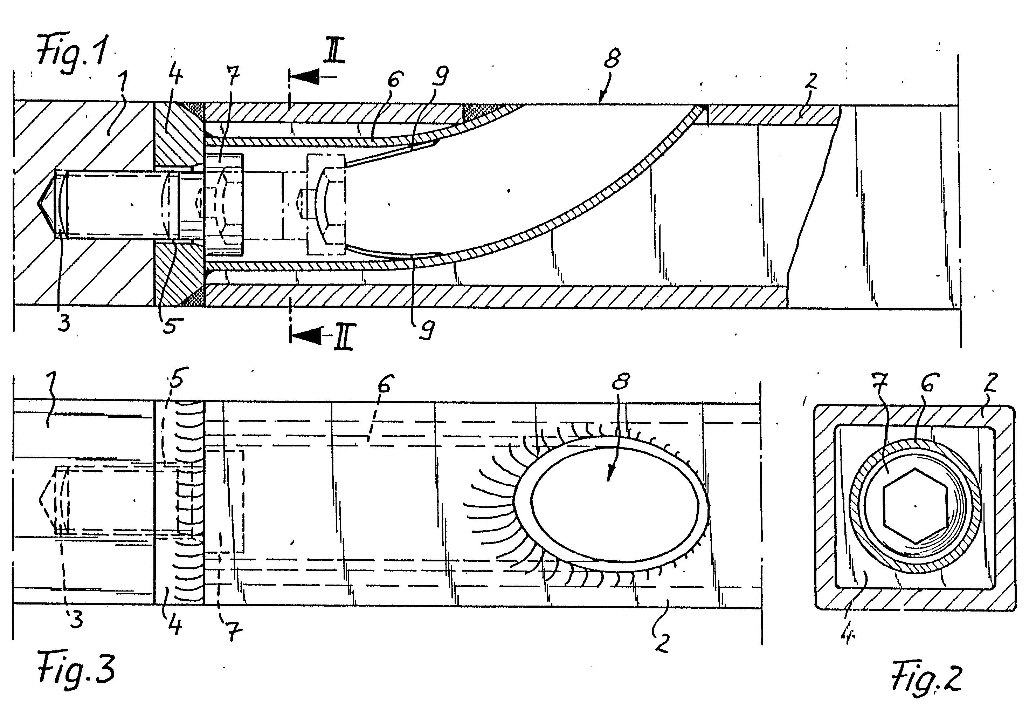

Figur 1 einen Teil eines Anschlußelementes mit verbundenem Stabelement eines Fachwerkes in Ansicht, teilweise aufgebrochen ;

Figur 2 einen Querschnitt gemäß Schnitt II-II der Fig. 1 ;

Figur 3 die Darstellung gemäß Fig. 1 in einer um 90° um die Längsachse gedrehten Lage.

Aus dem abgebildeten Element werden üblicherweise Fachwerke und/oder Raumfachwerke erstellt. Die Raumfachwerke werden aus Anschlußstutzen 1, beispielsweise aus Gußmaterial und mit diesen gleichgeformten Stabelementen 2 erstellt. Der Zweck dieser Ausbildung ist, daß am fertigen Raumfachwerk oder Fachwerk nicht sichtbar ist, daß dieses aus einzelnen Elementen zusammengefügt ist, sondern daß es wie eine einheitliche Schweißkonstruktion aussieht.

Im Ausführungsbeispiel ist sowohl der Anschlußstutzen 1 als auch das Stabelement 2 quadratisch profiliert. Die Stabelemente 2 bestehen aus gezogenen Stahlprofilrohren. Im offenen Ende des Anschlußstutzens 1 ist eine mittlere Gewindebohrung 3 vorgesehen. An dem Stabelement 2 ist endseitig eine Scheibe 4 mit Mittellochung 5 befestigt. Die Scheibe 4 ist außen genauso wie de Anschlußstutzen 1 und das Stabelement 2 profiliert. Sie ist mit dem Stabelement 2 schweißverbunden. An der Scheibe 4 ist im Inneren des Stabelementes 2 ein rohrförmiges Führungsteil 6 befestigt, welches an der innenliegenden Stirnseite der Scheibe 4 angeschweißt ist. Das Führungsteil 6 ist ein schwach gebogenes rundes Rohr. Der Lichte Innendurchmesser des Führungsteiles 6 ist nur gering größer als der Außendurchmesser einer in das Führungsteil 6 einschiebbaren Kopfschraube 7. Das Führungsteil 6 weist aber einen geringeren Außendurchmesser auf als der lichten Weite des Stabelementes 2 entspricht. Das Führungsteil 6 ist derartig schwach gekrümmt, daß es in einer Schraubendurchtrittsöffnung 8 in der Wandung des Stabelementes 2 ausmündet.

An dieser Mündung ist das Führungsteil 6 mit dem Lochrand des Stabelementes 2 schweißverbunden. Der Innenraum des Stabelementes 2 ist damit nach außen hin völlig abgeschlossen. Zur Montage des Fachwerkes wird das Stabelement lagerichtig vor dem entsprechenden Anschlußstutzen 1 angeordnet und dann die Kopfschraube, vorzugsweise eine Innensechskantschraube, lagerichtig in das Führungsteil 6 eingeschoben und in die Lochung der Scheibe 4 eingesetzt. Mittels eines mit Kreuzgelenkwelle versehenen Schlagschraubers, der ebenso wie die Schraube in das Führungsteil 6 eingeschoben werden kann, wird die Schraube 6 dann unter Vorspannung angezogen. Damit bei Überkopfmontage die Schraube 7 nicht aus dem Führungsteil 6 herausfallen kann, ist im Ausführungsbeispiel eine Federhülse 9 in einem der Schraubenlänge entsprechenden Abstand von der Scheibe 4 innen im Führungsteil 6 angeordnet. Beim Einschieben der Schraube 7 werden die Federarme der Federhülse 9 durch den Kopf der Kopfschraube 7 vorübergehend nach außen gespreizt und legen sich nach Durchtritt des Schraubenkopfes gegen die Stirnseite des Schraubenkopfes. Die Schraube ist damit vorläufig unverlierbar gehaltert und dennoch mittels Schlagschrauber betätigbar.

## Ansprüche

1. Fachwerk aus Hohlprofilen als Stabelemente (2), die an separaten Knotenkörpern zusammengeführt sind, wobei die Knotenkörper mehrere, räumliche und/oder flächige Winkel bildende Anschlußstutzen (1) für die gleichgeformten Stabelemente (2) aufweisen und ferner in den offenen Enden der Anschlußstutzen (1) Gewindebohrungen (3) vorgesehen sind, an den Stabelementen (2) endseitig Scheiben (4) mit Mittellochung (5) befestigt sind, wobei in letztere jeweils eine Kopfschraube (7) mit innerhalb des Stabelementes angeordnetem Kopf eingesetzt ist, die in die stutzenseitige Gewindebohrung (3) einschraubbar ist, wobei gegebenenfalls die Stabelemente (2), die Scheiben (4) und die Anschlußstutzen (1) zur Erzeugung eines absatz- und vorsprungsfreien Fachwerkes gleiche äußere Profilierung aufweisen, wobei ferner im Inneren des Stabelementes (2) ein rohrförmiges Führungsteil (6) angeordnet ist, welches schwach gekrümmt zur Wandung des zugehörigen Stabelementes (2) hin verlaufend ausgebildet ist und in einer Öffnung der Wandung des Stabelementes (2) ausmündet, dadurch gekennzeichnet, daß das Führungsteil (6) rückwärtig an der Scheibe (4) angeschweißt und die Scheibe (4) mit den Mündungsrändern des Stabelementes (2) verschweißt ist, daß das Führungsteil (6) einen Durchschiebekanal für die Kopfschraube (7) bildet und die Öffnung in der Wandung des Stabelementes (2) als Schraubendurchtrittsöffnung (8) ausgebildet ist.

2. Fachwerk nach Anspruch 1, dadurch gekennzeichnet, daß das Führungsteil (6) mündungsseitig mit dem Mündungsrand der Schraubendurchtrittsöffnung (8) des Stabelementes (2) verbunden ist.

3. Fachwerk nach Anspruch 1 oder 2, dadurch gekennzeichnet, daß das Führungsteil (6) runden Innen- und Außenquerschnitt aufweist.

4. Fachwerk nach einem der Ansprüche 1 bis 3, dadurch gekennzeichnet, daß der lichte Innendurchmesser des Führungsteiles (6) nur gering größer als der Außendurchmesser des Kopfes der Kopfschraube (7) ist und die Kopfschraube (7) als Innenvielkantschraube ausgebildet ist.

5. Fachwerk nach einem der Ansprüche 1 bis 4, dadurch gekennzeichnet, daß der Kopf der Kopfschraube (7) radial außen mit einer elastischen Manschette versehen ist, die an die Innenseite des Führungsteils (6) anlegbar ist.

6. Fachwerk nach einem der Ansprüche 1 bis 5, dadurch gekennzeichnet, daß das Führungsteil (6) in einem der Schraubenlänge entsprechenden Abstand von der Scheibe (4) innwandig eine elastische Manschette aufweist.

7. Fachwerk nach einem der Ansprüche 1 bis 6, dadurch gekennzeichnet, daß das Führungsteil (6) eine in einem der Schraubenlänge entsprechenden Abstand von der Scheibe (4) endende Federhülse (9) aufweist.

**Claims**

1. A framework of hollow profiles comprising bar elements (2) which converge at separate joints, the joints having several connectors (1) for the identically shaped bar elements (2), which connectors form three-dimensional and/or two-dimensional angles, and have threated holes (3) in their open ends, discs (4) each with a central perforation (5) which are fixed to the end faces of the bar elements (2), head screws (7) each of which can be screwed into the threaded hole (3) on the connector side, being inserted into each central perforation with the head arranged within the bar element, the bar elements (2), the discs (4) and the connectors (1) having, if appropriate, identical external profiles for producing a framework free from shoulders and projections, and a tubular guide part (6) arranged in the interior of each bar element (2), which guide part is formed with a shallow curvature running towards the wall of the associated bar element (2) and ending in an opening in the wall of the bar element (2), characterised in that the guide part (6) is welded to the rear of te disc (4), the disc (4) is welded to the end edge of the bar element (2), the guide part (6) forms a channel for insertion of the head screw (7), and the opening in the wall of the bar element (2) is formed as a screw passage opening (8).

2. A framework according to Claim 1, characterised in that the end face of the guide part (6), is connected to the edge of the screw passage opening (8) in the bar element (2).

3. A framework according to Claim 1 or 2, characterised in that the guide part (6) has a round internal and external cross-section.

4. A framework according to any one of Claims 1 to 3, characterised in that the clear internal width of the guide part (6) is only slightly greater than the external diameter of the head of the head screw (7), and that the head screw (7) is formed as a polyhedral socket screw.

5. A framework according to any one of Claims 1 to 4, characterised in that the head of the head screw (7) has radially on the outside an elastic collar which can engage against the inside of the guide part (6).

6. A framework according to any one of Claims 1 to 5, characterised in that the guide part (6) has an elastic collar on its inner wall at a distance from the disc (4) corresponding to the length of the screw.

7. A framework according to any one of Claims 1 to 6, characterised in that the guide part (6) has a spring sleeve (9) which ends at a distance from the disc (4) corresponding to the length of the screw.

**Revendications**

1. Charpente composée de profilés creux en tant qu'éléments de barre (2) assemblés les uns aux autres à des corps séparés constituant des nœuds, ces corps comportant plusieurs embouts de raccordement (1) qui forment des angles dans l'espace et/ou dans un plan, pour le raccordement des éléments de barre (2) de même forme que ces embouts, des taraudages (3) étant prévus dans les extrémités ouvertes de ces embouts de raccordement (1), tandis qu'en extrémité d'éléments de barre (2) sont fixées des plaquettes (4) ayant un perçage central (5) dans lequel est placée une vis à tête (7) dont la tête est située dans l'élément de barre et qui peut être vissée dans ledit taraudage (3), tandis qu'éventuellement les éléments de barre (2), les plaquettes (4) et les embouts de raccordement (1) présentent, pour produire une charpente dépourvue de décrochements et de saillants, le même profilage extérieur, tandis qu'en outre est disposée à l'intérieur de l'élément de barre (2) une pièce de guidage tubulaire (6) faiblement incurvée en direction de la paroi de l'élément de barre (2) correspondant, cette pièce de guidage débouchant dans une ouverture de la paroi de l'élément de barre (2), caractérisée en ce que la pièce de guidage (6) est soudée à l'arrière de la plaquette (4) qui est soudée aux bords d'embouchure de l'élément de barre (2), cette pièce de guidage (6) formant un conduit de passage de la vis à tête (7) et l'ouverture dans la paroi de l'élément de barre (2) étant conçu comme ouverture de passage de ladite vis.

2. Charpente selon la revendication 1, caractérisée en ce que la pièce de guidage (6) est, du côté de son embouchure, assemblée au bord d'embouchure de l'ouverture de passage de vis (8) de l'élément de barre (2).

3. Charpente selon la revendication 1 ou 2, caractérisée en ce que la pièce de guidage (6) présente des sections intérieure et extérieure rondes.

4. Charpente selon une des revendications 1 à 3, caractérisée en ce que le diamètre intérieur libre de la pièce de guidage (6) est seulement légèrement plus grand que le diamètre extérieur de la tête de la vis (7), cette tête présentant une creusure polygonale.

5. Charpente selon une des revendications 1 à 4, caractérisée en ce que la tête de la vis (7) est, radialement à l'extérieur, munie d'un manchon élastique qui est applicable au côté intérieur de la pièce de guidage (6).

6. Charpente selon une des revendications 1 à 5, caractérisée en ce que la pièce de guidage (6) comporte, sur sa paroi intérieure, un manchon élastique à une distance de la plaquette (4) correspondant à la longueur de la vis.

7. Charpente selon une des revendications 1 à 6, caractérisée en ce que la pièce de guidage (6) présente une douille à effet de ressort (9) se terminant à une distance de la plaquette (4) correspondant à la longueur de la vis.

0 083 356

Fig.1

Fig.3

Fig.2